# EUROPEAN PATENT APPLICATION

(11) **EP 1 947 806 A1**
(43) Date of publication of application: **23.07.2008**
(21) Application number: 06805017.8
(22) Date of filing: 20.10.2006
(51) Int. Cl.: H04L 12/26

(54) **A METHOD AND SYSTEM FOR SERVICE TRACE AND SERVICE TRACE TERMINAL, NETWORK ELEMENT**

(30) Priority: 22.10.2005 CN 200510100662
(71) Applicant: Huawei Technologies Co., Ltd., Longgang District Shenzhen Guangdong 518129 (CN)
(72) Inventor: LIU, Jianfeng, Guangdong 518129 (CN); MA, Qifeng, Guangdong 518129 (CN); LI, Yan, Guangdong 518129 (CN)
(74) Representative: Hengelhaupt, Jürgen
(86) International application number: PCT/CN2006/002808
(87) International publication number: WO 2007/045189

(57) **Abstract**

A system, a terminal and a network element are used for service trace and a method is used for service trace. The method comprises: operation and maintenance system setting up a trace identification on the service entity; in the processing of different service entity interaction, a service entity delivering said service trace identification to another service entity, the service entity received service trace identification and the service entity delivered service trace identification identifying service trace identification, and performing service trace. In the method, the trace information generated is up reported to O&M system. The trace identification following interaction information is automatically delivered between terminal and network element, between network element and network element, preventing maintainer from manually announcing trace command separately to each network element. Both Terminal and network element can start and participate service trace, providing more complete service information to know and to test service flow and to solve service fault.

## Description

### Field of the Invention

The present invention relates to a communication system with service tracking functions, and in particular, to a method, a system, a terminal and a network element for service tracking.

### Background of the Invention

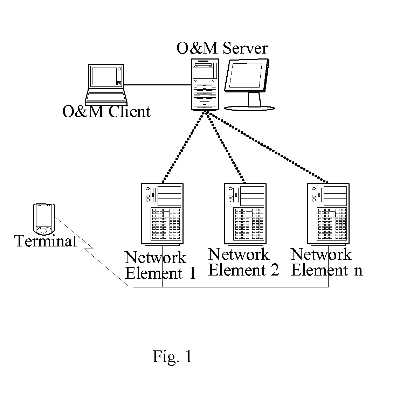

In the field of communications, service tracking and fault location capability of a system affects restoration from a fault. Automatic service tracking and fast fault location play an important role in a communication network with a special network tracking system, such as operating and maintaining (O&M) system. Figure 1 is a schematic diagram showing the networking of an existing O&M system.

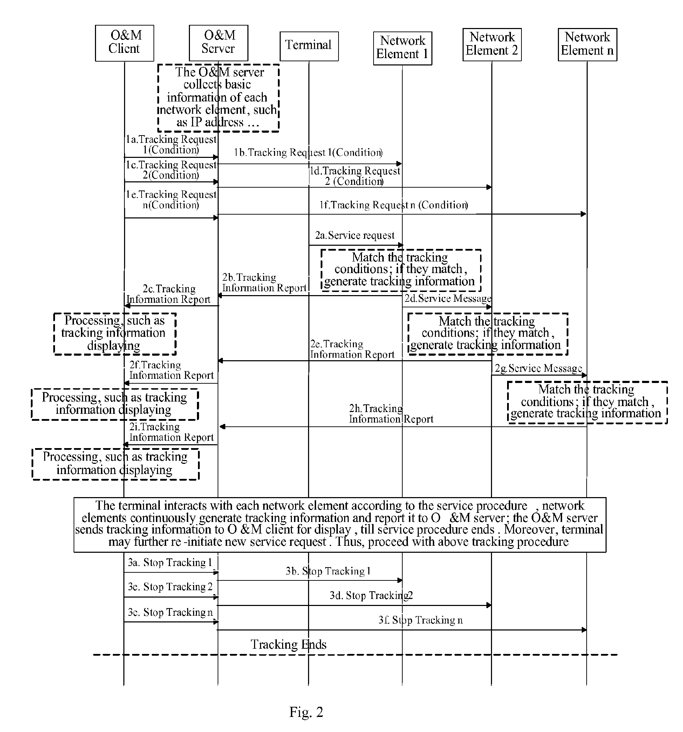

As can be seen from Figure 1, an O&M system includes an O&M server and an O&M client. The O&M system is connected with network equipments (network element 1, network element 2, ..., network element n) via the O&M server. The basic information of the network elements, such as IP addresses, types of operating systems, names, locations, and other description information, are saved in the O&M system. A terminal is connected with network equipment. The connection mode is wired or wireless. A maintainer requests the O&M server via an O&M client to start a maintenance task, for example, alarm monitoring and service signaling tracking, and start service a tracking process as shown in Figure 2. Given that equipment concerned with a certain service includes a terminal, network element 1, network element 2 and network element n, the process of starting and tracking the service may be as shown in Figure 2, specifically:

1) Manually sending service tracking tasks.

A maintainer presets a tracking condition, and instructs the O&M server via an O&M client to send the tracking condition to each network element to set a service tracking task. The tracking condition may be a terminal telephone number, a mobile station IMSI (International Mobile Subscriber Identity), an IMEI (International Mobile Equipment Identity) and so on. It may track not only a subscriber, but also a server or one or more links of signaling No.7, etc. The network element records the tracking condition and set the service tracking task. The network element is ready for service tracking after the step.

2) Service tracking and information reporting.

A terminal initiates a service request. The network element receives a first request information (supposing network element 1 in this case) and compares key information in the message, such as MSISDN (Mobile Station ISDN), with the tracking condition set in the network element. If they match, network element 1 will track a process of the service and report corresponding tracking information to the O&M system.

Given that the network element 1 is to exchange information with a network element 2 during the service process, the network element 1 sends a service message to the network element 2, and the network element 2 checks whether the service message matches the tracking condition; if yes, a service tracking is started, and tracking information generated during the service process is reported to the O&M system. When the network element 2 needs to interact with a network element n, the invoking process mentioned above is repeated.

It should be noted that the order of tracking conditions set for the network element group (network element 1, network element 2..., network element n) concerned with the service is not necessary to be fixed, and the contents of the tracking conditions are not necessary to be the same. For example, the tracking condition set for network element 1 may be MSISDN and the tracking condition set for network element n may be IMSI, so long as the service information matches the tracking condition and the object of tracking can be attained. A network element interacts with another network element, a network element interacts with a terminal, and the service process is tracked from the very beginning. The tracking information is reported to the O&M server and sent by the O&M server to the O&M client, the maintainer may analyze the service process, especially when an abnormal processing status appears.

3) Stopping service tracking.

The maintainer decides to stop tracking according to the status of the information content obtained, then instructs the O&M server via the O&M client to require each network element to cancel the service tracking task. The O&M server sends a command to the network element, and the service request started by the terminal will not be tracked after the network element cancels the tracking task.

It can be seen from the above process that, in the existing service tracking process, the terminal cannot start a service tracking but completely relies on the tracking command sent by the maintainer manually via the O&M system to the respective network element. Therefore, the automation level is low and the terminal cannot generate tracking information, which is inconvenient for analyzing the cause of the fault and recovering the fault.

### Summary of the Invention

The present invention resolves a technical problem by providing embodiments of a method, a system, a terminal and a network element for service tracking, in the embodiments, the service terminal and the network element may initiate and participate in service tracking and record the tracking information obtained when participating in the service tracking and then transfer the information to the O&M system.

In an embodiment, the method for service tracking according to the invention includes:

setting, by an operating and maintaining (O&M) system, a service tracking identity (ID) on a service entity; and

during a service interaction process between different service entities, delivering, by a service entity, the service tracking ID to another service entity, and identifying, by the service entity receiving the service tracking ID and the service entity sending the service tracking ID, the service tracking ID and implementing service tracking.

In an embodiment, the system for service tracking according to the invention includes an O&M system and a plurality of service entities, wherein the O&M system includes a tracking ID setting unit for setting service tracking IDs on the service entities; and during a service interaction process between different service entities, a service entity delivers the service tracking ID to another service entity, and the service entity receiving the service tracking ID and the service entity sending the service tracking ID identify the service tracking ID and implement service tracking.

In an embodiment, the terminal for service tracking according to the invention includes a storage unit for storing a service tracking ID and a service tracking unit for sending its own service tracking ID, receiving a service tracking ID sent by another terminal or network element, forwarding the service tracking ID sent by another terminal or network element, and identifying the service tracking ID of a service that needs to be tracked and implementing service tracking.

In an embodiment, the network element for service tracking according to the invention includes a storage unit for storing a service tracking ID; a service tracking unit for sending its own service tracking ID, receiving a service tracking ID sent by another terminal or network element, forwarding the service tracking ID sent by another terminal or network element, and identifying the service tracking ID of a service that needs to be tracked and implementing service tracking.

Therefore, with the embodiments of the method, system, terminal and network element for service tracking according to the invention, when a terminal initiates a service request message, a service tracking ID of the service carried in the message, and a network element concerned with the service identifies the service tracking ID in the message and automatically initiates service tracking, records the service log, and transfers the service tracking ID when interacting with the next entity. Or, an O&M system sets a service tracking ID on any network element, so that a terminal initiates a service request to the network element and other network elements exchange information with the network element receive the service tracking ID transferred by the network element, and the terminal and other network elements identify the service tracking ID and initiate a service tracking. The service tracking ID is automatically transferred with the interaction information between the terminal and the network element, or between network elements, a maintainer manually sends a tracking command to each network element is avoided. Both the terminal and the network element may initiate and participate in service tracking, thus more overall service information may be provided for understanding and testing the service process and recovering service faults. As a result, an improved service tracking function is provided.

### Brief Description of the Drawings

Figure 1 is a schematic diagram showing the networking of an existing O&M system;

Figure 2 is a signaling diagram of an existing service tracking process;

Figure 3 is a block diagram of a system for service tracking according to an embodiment of the invention;

Figure 4 is a flow chart of a method for service tracking according to another embodiment of the invention;

Figure 5 is a flow chart of a method for service tracking according to a third and a fourth embodiment of the invention;

Figure 6 is a block diagram of a terminal for service tracking according to an embodiment of the invention; and

Figure 7 is a block diagram of a network element for service tracking according to an embodiment of the invention.

### Detailed Description of the Embodiments

The invention will now be illustrated in further details in conjunction with the drawings and the specific embodiments of the invention.

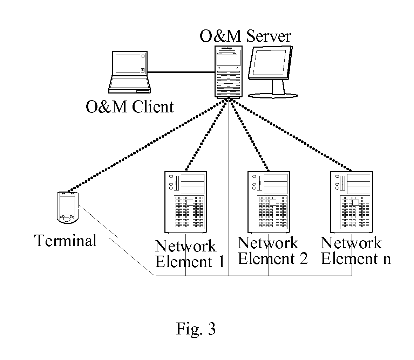

Figure 3 is a block diagram of the system for service tracking according to an embodiment. The system includes an O&M system and a plurality of service entities. The O&M system includes a tracking ID setting unit for setting a service tracking ID on a service entity; the service entity includes a service tracking ID. During a service interaction process between different service entities, a service entity transfers the service tracking ID to another service entity, and the service entity receiving the service tracking ID identifies the service tracking ID and initiates service tracking. After identifying the service tracking ID, the service entity receiving the service tracking ID requests from the O&M system to authenticate the service tracking ID, and initiates service tracking upon a successful authentication. If the service entity receiving the service tracking ID and the service entity sending the service tracking ID are in different trust domains, the service entity receiving the service tracking ID obtains the authentication message via the O&M system of the trust domain in which it exists and the O&M system of the trust domain in which the service entity sending the service tracking ID exists.

In the system shown in Figure 3, the service entity includes a terminal and a network element. According to the type of the terminal, the connection between the terminal and the network may be wireless or wire.

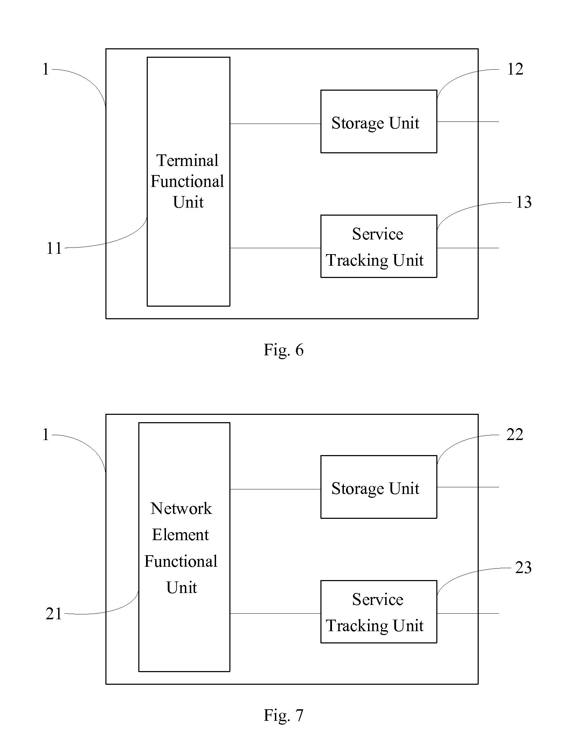

The terminal in the embodiment is a terminal for service tracking. The structure of the terminal is shown in Figure 6. Terminal 1 shown in Figure 6 is a specific embodiment, and includes a terminal functional unit 11 and a storage unit 12 adapted to store a service tracking ID. Terminal 1 further includes a service tracking unit 13 for sending its own service tracking ID, receiving a service tracking ID sent by other terminal or network element, forwarding the service tracking ID sent by other terminal or network element, and identifying the service tracking ID of a service that needs to be tracked and implementing service tracking. Terminal functional unit 11 represents all the other functional units of the terminal.

In another embodiment, the terminal further includes an authentication processing unit for requesting from the O&M system to authenticate the service tracking ID and initiating service tracking upon a successful authentication, after the service tracking unit identifies the service tracking ID that needs to be tracked.

Here, the network element is a network element for service tracking, the structure of which is shown in Figure 7. A network element 2 shown in Figure 7 is a specific embodiment, and includes a network element functional unit 21 and a storage unit 22 adapted to store a service tracking ID. The network element 2 further includes a service tracking unit 23 for sending its own service tracking ID, and receiving a service tracking ID sent by other terminal or network element, forwarding the service tracking ID sent by other terminal or network element, and identifying the service tracking ID of a service that needs to be tracked and implementing service tracking. The network element functional unit 21 represents all the other functional units of the network element.

In another specific embodiment of the network element, the network element further includes an authentication processing unit for requesting from the O&M system to authenticate the service tracking ID and initiating service tracking upon a successful authentication, after the service tracking unit identifies the service tracking ID that needs to be tracked.

The terminal in the system is an intelligent terminal with certain processing and storing capabilities such as computing, storing and networking. The terminal with networking capability may establish a network connection with the O&M server of the system; the terminal with computing capability may identify a service tracking ID carried by the network element; and the terminal with storing capability may record a service log, generate and save the service tracking information.

The network connection established between the intelligent terminal and the O&M server may be TCP/IP connection or connection of other protocol mode. The physical connection is in a form of wireless, such as GPRS, or in a form of wire mode, for example, the terminal has a network interface for being connected to the O&M server.

Embodiment 1:

The following steps show a simple embodiment of a method for service tracking according to the invention in which service tracking is initiated and implemented by setting a tracking ID on a terminal. A network O&M server generates a service tracking ID for one kind of services (for example, download service), delivers and sets the service tracking ID on a terminal. Specifically, the delivery may be implemented via a short message or via direct TCP/IP network connection. Accordingly, the service tracking ID may be set on the terminal by a subscriber manually or by the O&M server via a TCP/IP network connection directly. It is assumed that the processing of a certain service needs the participation of a network element 1 and a network element 2.

1) A terminal initiates a service request to the network element 1 via a service request message carrying a service tracking ID.

2) The network element 1 identifies the service tracking ID, starts service tracking, records service processing log during the further service processing, and generates tracking information for service analysis, carrying the service tracking ID. If the tracking information generated is reported to the O&M server instantly, it turns to step (3); if the tracking information is obtained by the O&M server via query after the service proceeded for a period of time or after the service procedure ends, the tracking information is saved.

3) The O&M server checks the service tracking ID, and delivers the service tracking information reported by the network element 1 to the O&M client for processing such as displaying and analyzing the service process, etc., after determining that the service tracking ID is consistent with the service tracking ID that is set on the terminal initially.

4) It is assumed that in the service, the network element 1 needs to exchange the service information with the network element 2, thus the network element 1 delivers the service information carrying the service tracking ID to the network element 2.

5) The network element 2 identifies the service tracking ID, directly starts service tracking, records service processing log, generates the tracking information for service analysis, and reports to the O&M server the tracking information carrying the service tracking ID.

6) The O&M server checks the service tracking ID, and delivers the service information reported by the network element 2 to the O&M client for processing after determining that the service tracking ID is consistent with the service tracking ID that is set on the terminal initially.

It should be understood that in step (1), before, or at the same time or after sending a service request to the network element, the terminal may initiatively start service tracking and report the tracking information to the O&M system.

In consideration of network security, the following step may also be added before step (2):

The network element 1 that receives the service request information from the terminal authenticates the service tracking ID carried in the service request information, and the network element 1 starts service tracking upon a successful authentication.

Embodiment 2:

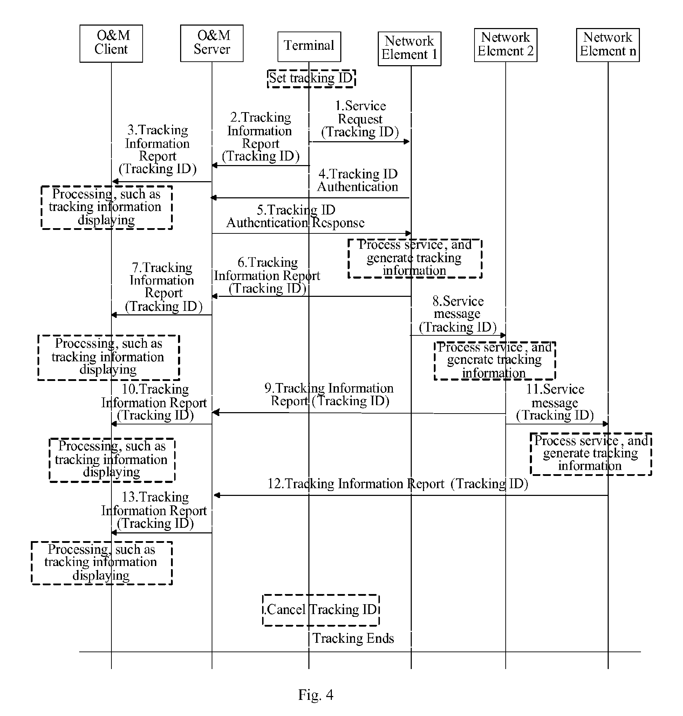

Figure 4 is a schematic signaling diagram of the process in which a terminal starts and participates in service tracking. It is a preferred embodiment in which the function that the terminal participates in service tracking, reports the service tracking information and implements network authentication on the service tracking ID is extended on the basis of Embodiment 1.

1) A terminal initiates a service request to the network element 1 via a service request message carrying a service tracking ID.

2) The terminal starts service tracking, records service log, and reports to an O&M server the service tracking information carrying the service tracking ID.

3) The O&M server checks the service tracking ID, and delivers the service tracking information to an O&M client for processing such as display processing, after determining that the service tracking ID is consistent with the service tracking ID that is set on the terminal initially.

4) The network element 1 that receives the service request message from the terminal detects that a service tracking ID is included in the service request message, and starts an authentication on the service tracking ID, i.e., sends to the O&M server an authentication message carrying the service tracking ID.

5) The O&M server compares the service tracking ID with the service tracking ID that is set initially, and feeds back to the network element the response of the authentication on the service tracking ID. If the service tracking ID is identical with the service tracking ID that is set initially, the authentication is successful.

6) The network element 1 starts service tracking, records service processing log during further service processing, generates tracking information for service analysis, and reports to the O&M server the tracking information carrying the service tracking ID.

7) The O&M server checks the service tracking ID, and delivers the service tracking information reported by the network element 1 to the O&M client for processing such as displaying and analyzing the service process, etc., after determining that the service tracking ID is consistent with the service tracking ID that is set on the terminal initially.

8) It is assumed that in the service, the network element 1 needs to exchange the service information with the network element 2, thus the network element 1 delivers the service information carrying the service tracking ID to the network element 2.

9) The network element 2 identifies the service tracking ID, directly starts service tracking, records service processing log, generates the tracking information for service analysis, and reports to the O&M server the tracking information carrying the service tracking ID.

10) The O&M server checks the service tracking ID, and delivers the service information reported by the network element 2 to the O&M client for processing after determining that the service tracking ID is consistent with the service tracking ID that is set on the terminal initially.

Steps (11) to (13) show that the network element 2 delivers the service tracking ID to a network element n when the network element n is required to participate in the service, and the network element n starts service tracking and generates the tracking information. The specific process is the same as that of steps (8) to (10).

The terminal continues to interact with each network element in accordance with the service procedure. The terminal and the network elements continuously generate tracking information and report the tracking information to the O&M server; and the O&M server reports the tracking information to the O&M client for display, till the service procedure ends. During the procedure or after the procedure ends, the service tracking ID may be cancelled by a subscriber manually or by an operation of a maintainer via the O&M client, or the service tracking ID may be automatically deleted because the life time of the service tracking ID that is set by the O&M server expires. This may prevent the network performance being affected due to the overuse of the service tracking ID by the client. After the service tracking ID is cancelled, no service tracking ID is included in a service request when the terminal initiates the service request next time, thus the network element processes the service request according to the normal procedure.

It can be seen from the embodiments mentioned above that the terminal may start a service tracking actively. The terminal initiates service request message carrying the service tracking ID, and a network element concerned with the service identifies the service tracking ID in the message, automatically starts service tracking, records the service log, generates and reports the tracking information required for service analysis, and delivers the service tracking ID when interacting with the next entity. The tracking flag is automatically delivered along with the interaction information between the terminal and the network element, so that it may be avoided that a maintainer manually issues tracking commands to respective network elements. Moreover, the terminal may participate in the service tracking, thus more comprehensive service information may be provided for understanding and testing the service procedure and recovering the service failure.

Embodiment 3:

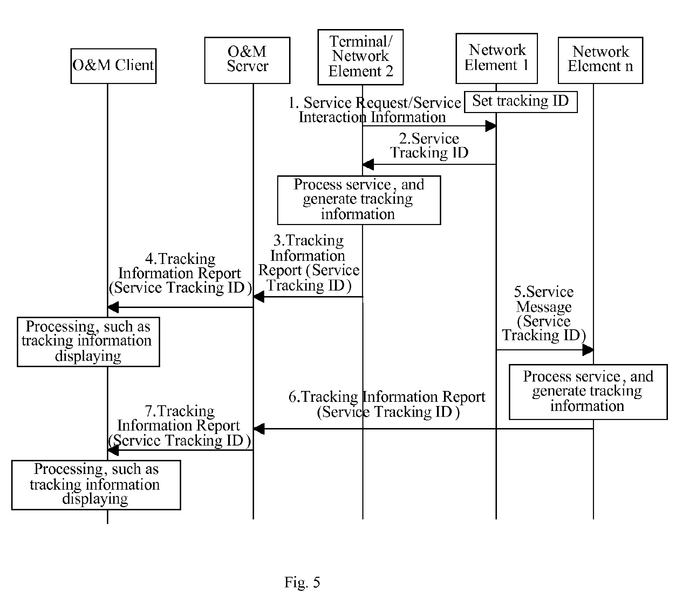

As shown in Figure 5, an O&M server sets a service tracking ID on network element 1. In view that TCP/IP connection is usually kept between the O&M server and the network element, the service tracking ID may be set on network element 1 via the TCP/IP network connection. When the terminal sends a service request to network element 1, the tracking ID is delivered to the terminal, and service tracking is started. The specific steps are shown as follows:

1) The terminal sends a service request to a network element 1.

2) After receiving the service request, the network element 1 sends a service tracking ID to the terminal.

3) The terminal identifies the service tracking ID, starts service tracking, generates service tracking log and generates tracking information required for service analysis, and reports the tracking information to the O&M server.

4) The O&M server checks the service tracking ID, and delivers the tracking information reported by the terminal to the O&M client for processing after determining that the service tracking ID is consistent with the service tracking ID that is set on the network element 1 initially.

5) If there is also a need for network element n to be invoked to participate in the service, the network element 1 sends to network element n the service information carrying the service tracking ID.

Step (6) and the subsequent steps are the identical with step (9) and its subsequent steps in Embodiment 2 shown in Figure 4, so they will not be described again here.

Embodiment 4:

As shown in Figure 5, an O&M server sets a service tracking ID of a certain service on any one of the network elements.

1) Another network element sends service interaction information to the network element, on which a service tracking ID is set, as required by the service.

2) Upon receiving the service interaction information, the network element on which the service tracking ID is set sends the service tracking ID to the another network element.

3) The another network element identifies the service tracking ID, starts service tracking, generates service tracking log and generates tracking information required for service analysis, and reports the tracking information to the O&M server.

The subsequent processing procedure, for example, the step in which the O&M server checks the service tracking ID and delivers the reported tracking information to the O&M client for processing after determining that the service tracking ID is consistent with the service tracking ID that is set initially is identical with step (4) and its subsequent steps in embodiment 3, so it will not be described again here.

It can be seen from the above embodiments that service tracking may be started by sending, via a terminal, a service request to a network element on which a service tracking ID is set. Or, the service tracking may be started by sending, via a network element, service interaction information to a network element on which the service tracking ID is set. The O&M system may set a service tracking ID on any one of the network elements, so that a terminal that sends the service request to this network element and other network elements that exchanges information with this network element receive the service tracking ID delivered by this network element, and the terminal and other network elements identify the service tracking ID to start the service tracking and report the tracking information. The tracking ID is automatically delivered along with the interaction information between a terminal and a network element and between network elements, so that it may be avoided that a maintainer manually issues a tracking command to each network element respectively; moreover, the terminal may participate in the service tracking, thus more abundant service information may be reported to the O&M system.

It should be noted that, some services usually need to be commonly supported by different operator systems. When two network elements in service interaction belong to the same operator system, i.e., the same trust domain, the two network elements are mutually trusted equipments, and the network element that receives the service tracking ID no longer needs to authenticate the service tracking ID; instead, it directly starts service tracking after identifying the service tracking ID. When two network elements lie in different operator systems, i.e., different trust domains, the network element having the service tracking ID sends an authentication message containing the service tracking ID to the O&M system of the same trust domain, and an O&M system of the operator system in which the other network element exists exchanges the authentication information with the former O&M system based on the protocol between the operators, and then feeds it back to the network element that lies in the same trust domain of this O&M system, so that cross-domain authentication may be realized. In a similar way, in Embodiment 2 shown in Figure 4, because the terminal does not lie in the trust domain of any operator system, in consideration of security, network element 1 may authenticate the service tracking ID from the terminal.

It should be further noted that, it is unnecessary for the service tracking information from the network element and the terminal to be delivered to the O&M system in real-time; in other words, the service tracking information may be obtained at other selected time as required, such as the case described in step 2 of Embodiment 1: The O&M client initiates a query to the intelligent terminal and network element in the condition of service tracking ID after the service proceeds for a period of time or after the whole service process ends. The network element records service log. Because the intelligent terminal has some storage function, it can record the service tracking information. The O&M system may query the service information of different services and that at different time points according to the time stamp and the service tracking ID of any service.

In conclusion, by the method according to the invention, the tracking flag may be automatically delivered along with the interaction information between the terminal and the network element and between network elements, so that it may be avoided that a maintainer manually issues a tracking command to each network element respectively. The terminal and the network element may both start and participate in service tracking, thus more comprehensive service information may be provided for understanding and testing the service process and recovering the service failure.

Additional advantages and modifications will readily occur to those skilled in the art. Therefore, the invention in its broader aspects is not limited to the specific details and representative embodiments shown and described herein. Accordingly, various modifications and variations may be made without departing from the spirit or scope of the invention as defined by the appended claims and their equivalents.

## Claims

1. A method for service tracking, comprising:
setting, by an operating and maintaining (O&M) system, a service tracking identity (ID) on a service entity; and
delivering, by a service entity, the service tracking ID to another service entity during a service interaction process; and identifying, by the service entity receiving the service tracking ID and the service entity sending the service tracking ID, the service tracking ID and implementing service tracking.

2. The method according to claim 1, wherein the service entity receiving the service tracking ID requests from the O&M system to authenticate the service tracking ID after identifies the service tracking ID, and starts service tracking upon a successful authentication.

3. The method according to claim 2, wherein the service entity receiving the service tracking ID obtains an authentication message via the operating and maintaining system of the trust domain in which it exists and the operating and maintaining system of the trust domain in which the service entity sending the service tracking ID exists, if the service entity receiving the service tracking ID and the service entity sending the service tracking ID lie in different trust domains.

4. The method according to claim 1, 2 or 3, wherein the service tracking ID set by the first service entity sent to the second service entity is through a service request.

5. The method according to claim 1, 2 or 3, wherein the second service entity delivers the service tracking ID along with the service stream to the first service entity when the first service entity sends the service request to the second service entity.

6. The method according to claim 4, wherein the first service entity is a terminal and the second service entity is a network element.

7. The method according to claim 5, wherein the first service entity is a terminal and the second service entity is a network element.

8. The method according to claim 1, 2 or 3, comprising: delivering, by the service entity in which the service tracking ID is set, a service tracking ID attached with a parameter indicating a current tracking to another service entity.

9. The method according to claim 1, further comprising:
recording a service log upon starting the service tracking;
generating a tracking information required for service analysis and reporting the tracking information to an operating and maintaining system server;
wherein the operating and maintaining system server checks the service tracking ID, and delivers the reported tracking information to an operating and maintaining system client for processing after determining that the service tracking ID is consistent with the service tracking ID that is set initially.

10. The method according to claim 9, wherein the tracking information is reported to the operating and maintaining system in real time; or
the tracking information is saved by the service entity and obtained by the operating and maintaining system via a query after the service process ends.

11. The method according to claim 1, further comprising:
canceling the service tracking ID during the service procedure or after the service process ends, by a subscriber manually or a operating and maintaining system client; or
canceling the service tracking ID automatically because the life time of the service tracking ID expires.

12. A system for service tracking, comprising an operating and maintaining (O&M) system and a plurality of service entities, wherein the O&M system comprises a tracking ID setting unit for setting a service tracking ID on a service entity, and during a service interaction process between different service entities, a service entity delivers the service tracking ID to another service entity, and the service entity receiving the service tracking ID and the service entity sending the service tracking ID identify the service tracking ID and implement service tracking.

13. The system according to claim 12, wherein the service entity receiving the service tracking ID requests from the O&M system to authenticate the service tracking ID after identifies the service tracking ID, and starts service tracking upon a successful authentication.

14. The system according to claim 13, wherein the service entity receiving the service tracking ID is further adapted to obtain an authentication message via an operating and maintaining system of the trust domain in which it exists and the operating and maintaining system of the trust domain in which the service entity sending the service tracking ID exists, if the service entity receiving the service tracking ID and the service entity sending the service tracking ID lie in different trust domains.

15. A terminal for service tracking, comprising:
a storage unit for storing a service tracking ID, wherein the terminal further comprises: a service tracking unit adapted to send its own service tracking ID, receive a service tracking ID sent by other terminal or network element, forward the service tracking ID sent by other terminal or network element, and identify the service tracking ID of a service that needs to be tracked and implement service tracking.

16. The terminal for service tracking according to claim 15, further comprising an authentication processing unit adapted to request from an operating and maintaining (O&M) system to authenticate the service tracking ID after the service tracking unit identifies the service tracking ID that needs to be tracked and implement service tracking upon a successful authentication.

17. A network element for service tracking, comprising a storage unit for storing a service tracking ID, wherein the network element further comprises:
a service tracking unit adapted to send a service tracking ID of its own, receive a service tracking ID sent by other network element or terminal, forward the service tracking ID sent by other network element or terminal, identify the service tracking ID of a service that needs to be tracked and implement service tracking.

18. The network element for service tracking according to claim 17, further comprising an authentication processing unit adapted to request from an operating and maintaining (O&M) system to authenticate the service tracking ID after the service tracking unit identifies the service tracking ID that needs to be tracked and implement service tracking upon a successful authentication.
